# EUROPEAN PATENT SPECIFICATION

(11) **EP 0 811 285 B1**
(45) Date of publication and mention of the grant of the patent: **10.11.2004**
(21) Application number: 96942888.7
(22) Date of filing: 04.12.1996
(51) Int. Cl.: H04L 12/413

(54) **METHOD AND APPARATUS IN NETWORK ADAPTER FOR AUTOMATIC RETRANSMISSION OF PACKETS**
VERFAHREN UND VORRICHTUNG IN EINEM NETZADAPTER ZUR AUTOMATISCHEN SENDEWIEDERHOLUNG VON PAKETEN
PROCEDE ET DISPOSITIF DESTINES A UN ADAPTATEUR DE RESEAU POUR LA RETRANSMISSION AUTOMATIQUE DE PAQUETS

(30) Priority: 22.12.1995 US 577575
(43) Date of publication of application: 10.12.1997
(73) Proprietor: Hewlett-Packard Development Company, L.P., Houston, Texas 77070 (US)
(72) Inventor: PAUL, Gideon, 93903 Gilo Jerusalem (IL); WERTHIMER, Aviad, 95427 Jerusalem (IL); BEN-MICHAEL, Simoni, 90917 Givat Zeev (IL); HAWE, William, Pepperell, MA 01463 (US)
(74) Representative: Goodman, Christopher
(86) International application number: PCT/US1996/019330
(87) International publication number: WO 1997/023976

(56) References cited:
- EP-A- 0 577 115
- US-A- 5 353 287
- US-A- 5 446 735
- IBM TECHNICAL DISCLOSURE BULLETIN, vol. 35, no. 5, 1 October 1992, pages 167-171, XP000312922 "CSMA/CD LAN ADAPTER TRANSMIT DATA ERROR HANDLER"

## Description

### FIELD OF THE INVENTION

The invention relates to local area networks (LANs) such as Ethernet networks, and more particularly to network adapters that control communication over the network.

### BACKGROUND OF THE INVENTION

Ethernet is a commonly used name for a LAN that uses a network access protocol referred to as Carrier Sense Multiple Access with Collision Detection (CSMA/CD). The CSMA/CD protocol is defined in ANSI/IEEE Std. 802.3, published by the Institute of Electrical and Electronics Engineers, Inc., 345 East 45th Street, New York, NY, 10017, USA. While that standard applies to a 10 Mbps (megabits/sec) CSMA/CD channel (e.g., a network bus), it will be understood that the present invention is not limited to such channels, but can be applicable to other channels operating, for example, at 100 Mbps.

Under CSMA/CD rules for channel access, all nodes of the network have equal priority of access and may begin transmitting as soon as the channel is clear. Any node "wishing" to transmit messages must first "listen" to make sure that the channel is clear before beginning to transmit. If the node wishing to transmit does not detect any other transmissions during a predetermined period of time called the inter-packet delay or gap, e.g., of 9.6 microseconds, it commences transmission. The node sends the messages, as well as control information, over the network system in blocks, often called packets, each having a pre-determined size.

For an understanding of the invention, it will be useful to discuss several commonly-encountered, potentially network-performance-degrading occurrences or conditions, including excessive collisions, and network adapter buffer underflow.

### A. Collision Handling and Excessive Collisions.

If more than one node were to transmit packets over the channel at the same time, the resulting signals can interfere and be garbled. Such simultaneous, multiple transmissions of packets over the channel is called a "collision."

Typically, if a node that has started transmission detects a collision, it continues transmitting for a predetermined length of time, called a "collision window," to make sure that all nodes wishing to transmit will also detect the collision. What the node transmits during the collision window after detecting the collision is typically meaningless data, e.g., pursuant to CSMA/CD protocol, 32 bits of alternating "1" 's and "0"'s, called "JAM". Every other "active" node, i.e., every other node having data packets to transmit, which detects the collision also transmits the 32 bits of JAM. Then, every node that has detected the collision terminates its transmission.

The nodes involved in the collision suspend transmission for a period of time equal to the inter-packet delay plus an additional delay, often referred to as "backoff." The backoff has any of various durations, typically selected by the node at random, and therefore is usually different from that introduced by the other nodes involved in the collision. After their respective backoff times have elapsed, the active nodes retry transmission of their respective packet again. The various, different lengths of backoff times make it more likely that the retries will be successful, i.e., that the nodes will not encounter another collision.

Of course, the first attempt at retransmission may not be successful. The transmission retry is then repeated, with inserted backoffs, until transmission is successful or until a predetermined maximum number (e.g., 16, pursuant to the CSMA/CD protocol) of attempts have been made and all have terminated due to collision. When the maximum number of transmission attempts occurs without successful transmission, the involved node is said to have experienced "excessive collisions" and discards the packet that had been ready for transmission. The excessive collision condition is reported to a higher protocol layer of the network. This results in degradation of system performance because recovery by the higher network layer takes place after a long time-out (e.g., several seconds), which introduces substantial packet delays. Also, this results in system degradation because taking care of such an event is processor-time consuming.

In summary, due to the introduced back-off times between retries and the involvement of the higher protocol layer, excessive collision followed by retry introduces long latency to transmission of the involved packet, and degrades system performance.

### B. Network Adapters And Buffer Underflow.

A difficulty with network operation arises within network adapters, such as Ethernet adapters, located in the individual nodes of the network. A network adapter typically manages communication between the host node containing the adapter and the network system to which it is connected.

For example, the network adapter is responsible for moving data between a disk storage facility connected to the network system and a main memory of the host node. When inbound data is received from the disk storage facility, the network adapter may transfer the data to the main memory of the host node to await further processing. To make the transfer, the network adapter must gain access to a system bus to which components of the host node are connected. Likewise, the network adapter transfers outbound data to the network after the data is retrieved over the system bus from the main memory.

The network system and the system bus may be considered shared resources, requiring arbitration to gain access to effectuate data transfers in different directions. Accordingly, a transfer of data via the network adapter requires gaining control of the shared resource, which typically entails (i) a request for access to a shared resource followed by a grant of access, and (ii) a "burst" of data of a predetermined size to/from the shared resource. Because the shared resource may be busy performing operations for other components of the host node, the shared resource is not always available immediately for use. The time between issuance of a request to access the shared resource and grant of access to that resource constitutes "latency" of the resource. Typically, the latency varies from system to system, depending upon the characteristics of the resource, e.g., the throughput of the network system or the system bus and the number of units (e.g., host components) connected thereto.

To accommodate the variable latency, a network adapter typically includes buffer memories in both the receive and transmit paths. The receive buffer is disposed along the receive path between the network system and the system bus to temporarily store incoming data until access to the shared resource, e.g., the system bus, can be obtained and transmission thereto can commence.

The transmit buffer is disposed along the transmit path between the system bus and the network system to temporarily store outbound data. Once access to the network system is granted, a block of data, e.g., a packet, must be transferred typically at a predetermined fixed rate to the network system. The transmit buffer usually permits a steady stream of outbound data to be sent at that rate, for example, even when access to the system bus has not yet been granted.

Under some circumstances a problem may arise called buffer underflow. Buffer underflow occurs when there is insufficient data in the transmit buffer to sustain the required transmission rate, and access can not be gained to the shared resource, e.g., the system bus to remedy the data shortfall.

A buffer underflow can also occur when the rate of data entering the transmit buffer from the shared resource, e.g., the system bus, is lower than the rate of data exiting the buffer to the network system. This phenomenon can happen in nodes with high system bus latencies. This phenomenon can also happen even through the average throughput of the system bus is larger than the maximum throughput of the network system, because of the "bursty" nature of activity on the system bus; there are individual periods of time when the adapter encounters long system bus latencies even if the system bus does not normally have high latencies.

When an underflow condition occurs, typically the node stops packet transmission, discards the untransmitted portion of the packet, and sends an interrupt signal to the processor of the node. The interrupt indicates that the transmission has aborted due to an underflow condition. Since the upper network protocol layer will not see the "receive acknowledge" of the aborted packet, it will eventually time out, and will start activity to recover from this state, as mentioned above. The involvement of the upper network protocol layer for these purposes, as noted before, is time consuming and causes degradation of system performance (in terms of processor time) and network performance (in terms of packet delay).

To avoid buffer underflow, known network adapters commence transmission only after a pre-determined amount of data has entered the transmit buffer, that amount being referred to as a "transmit threshold." The transmit threshold can be set to a number of bytes, such as all of the bytes of a packet to be transmitted, or, for example, the threshold can be reached when 128 bytes of a 1518-bytes packet are already in the transmit buffer. Unfortunately, this approach adds a transmit delay to the beginning of transmission, which is equal to at least the length of time it takes for that amount of data to be obtained and stored in the transmit buffer, which is referred to as "internal transmit delay." That delay can degrade results obtained when benchmarking drivers running on the adapter, and can significantly impact network throughput particularly if the delay is longer than the inter-packet gap.

EP 0 577 115 discloses a programmed I/O Ethernet adapter with early interrupts for accelerating data transfer. The adapter generates early interrupts when only a portion of a packet has been received, and when the copying of a large packet to the host may overlap reception of the packet end.

A document entitled "IBM Technical Disclosure Bulletin" (vol. 35, No. 35, October 1992) discloses a CSMA/CD LAN adapter transmit data error handler.

US 5 446 735 discloses a method of allocating bandwidth in a shared transmission channel employing CSMA/CD.

US 5 353 287 discloses a method for adding a message priority scheme to a local area network station control unit operating in accordance with CSMA/CD bus access protocol.

### SUMMARY OF THE INVENTION

A first embodiment relates to a method implemented by a computer network adapter connected to a shared source and having a transmit buffer, for automatic retransmission of a packet in the event of unfavorable transmission condition, e.g., an excessive collision condition or a buffer underflow condition, in which the retransmission is attempted substantially immediately after the collision (and without backoff) if the number of collisions encountered previously with respect to that packet is below an excessive collision limit. Essentially, the method involves detecting any collisions that occur and counting each detected collision up to a collision count limit. Each time the collision count limit is reached, the method increments an "excessive" collision count indicative of the number of excessive collisions. If the excessive collision count exceeds a limit, the method stops retransmission of the packet and discards the data of the packet that is stored in a transmit buffer of the adapter.

The excessive collision limit can be a constant value or can be dynamically determined in response to traffic conditions on the network.

Another embodiment relates to a method implemented by a computer network adapter for automatic retransmission of any packet involved in an unsuccessful transmission attempt due to transmit buffer underflow, in which the value of the transmit threshold is increased from a relatively small value for the initial transmission attempt to a higher value for the retransmission. The method entails generally the steps of (a) stopping the transmission buffer on occurrence of an underflow condition and discarding any transmitted fragment of the packet at the receive end as a "runt" packet; and (b) substantially immediately retrying another transmission of the packet for up to a selected number of attempts (the "retry number" or "N") using the higher transmit threshold but without any inserted delay or backoff between the N retries.

Preferably, for the initial transmission attempt, the adapter requires only a small number of bytes of the packet to be stored in the transmit buffer, i.e., a small value for the transmit threshold (e.g., equal to 4 bytes). After occurrence of a buffer underflow condition, the adapter attempts a retry in accordance with the invention only after a substantially larger portion of the packet has entered the transmit buffer for transmission. This requirement is intended to overcome the peak latency that frequently causes the initial underflow condition. If any retry succeeds, the adapter need not issue an interrupt for notifying failed transmission. The algorithm can count the retries of transmission of underflow packets and report the count for network or system monitoring purposes.

More specifically, in operating an adapter connected to a shared resource for transmitting data thereto, a further embodiment relates to a method for packet transmission and automatic retrying of packet transmission in the event of a buffer underflow. The method in accordance with this embodiment includes the steps of (A) commencing transmission after a pre-determined first amount of data is stored in a transmit buffer; (B) if a buffer underflow condition then occurs, stopping transmission, and commencing transmission again only after a pre-determined second amount of data, larger than the first amount of data, is stored in the transmit buffer; and C) promptly after step (B), commencing transmission again and repeating step (B) and this step (C), in order, for a number of times until either completion of transmission of the packet or a preselected limit on the retry number or count is reached.

If the latter occurs, the method discards the data of the packet in the transmit buffer and generates a signal indicative of an underflow condition.

Described hereinafter is a method which can provide automatic retransmission of a packet following a transmit buffer underflow condition as well as following an excessive collision condition. In accordance with this aspect, if a transmit buffer underflow condition occurs during transmission of a packet, the method stops transmission of the packet and commences transmission again of that packet only after a second amount of data of the packet is stored in the transmit buffer. The second amount of data is larger than the amount of data required to be stored in the transmit buffer prior to the attempted transmissions that resulted in the underflow condition. The method can include the dynamic determination of both the excessive collision limit and the second data amount in response to network traffic conditions. Alternatively, the excessive collision limit and the second data amount can have predetermined constant values.

More specifically, the method provided by one further embodiment can be implemented by a network adapter for automatic retransmission of a packet of data following an excessive collision condition. Transmission of a packet is initiated after a predetermined number of bytes of the packet are available for transmission. If a collision is detected, a collision count is incremented and another attempt to transmit is performed unless the collision count exceeds a predetermined first limit, e.g., sixteen, that essentially defines what constitutes "excessive collision." (Of course, transmission can be interrupted in the event other conditions occur, such as an underflow condition, but such other conditions are not within the purview of the broader aspects of this invention.) If the collision count exceeds the first limit, the method performs a number of steps. First, if a retry (RNEC) count exceeds a second limit, transmission of the packet is stopped, and second, if the RNEC count does not exceed the second limit, the RNEC count is incremented and the method again performs the foregoing steps using the incremented RNEC count. Consequently, the transmission initiating step of the invention is performed up to a number of times equal to the product of the first limit times the second limit, i.e., of the maximum value at the collision count times the maximum value of the RNEC count.

Accordingly, an efficient mechanism is provided for handling excessive collision conditions in such a way as to avoid the necessity of introducing backoff times between retries and to avoid the involvement in most cases of a higher protocol layer. Accordingly, automatic transmission is provided without introducing long latency to transmission of the involved packet and without degrading system performance, as in the prior art technique described above.

The invention resides in a method of operating an adapter connected to a network by a shared resource for transmitting data thereto, said adapter having a transmit buffer and wherein the method comprises the steps according to claim 1.

### BRIEF DESCRIPTION OF THE DRAWINGS

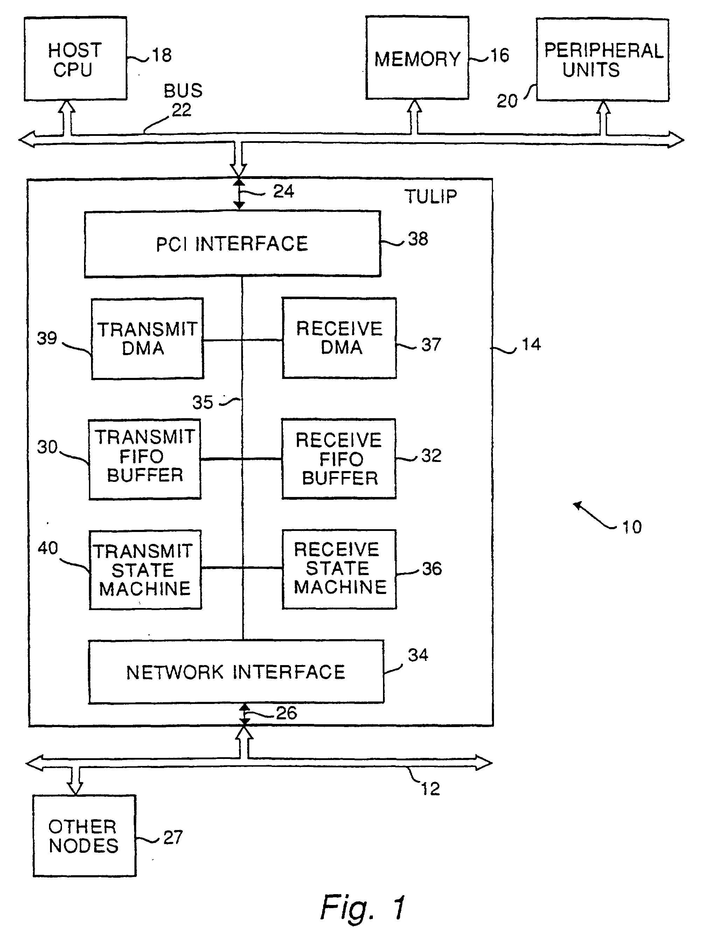

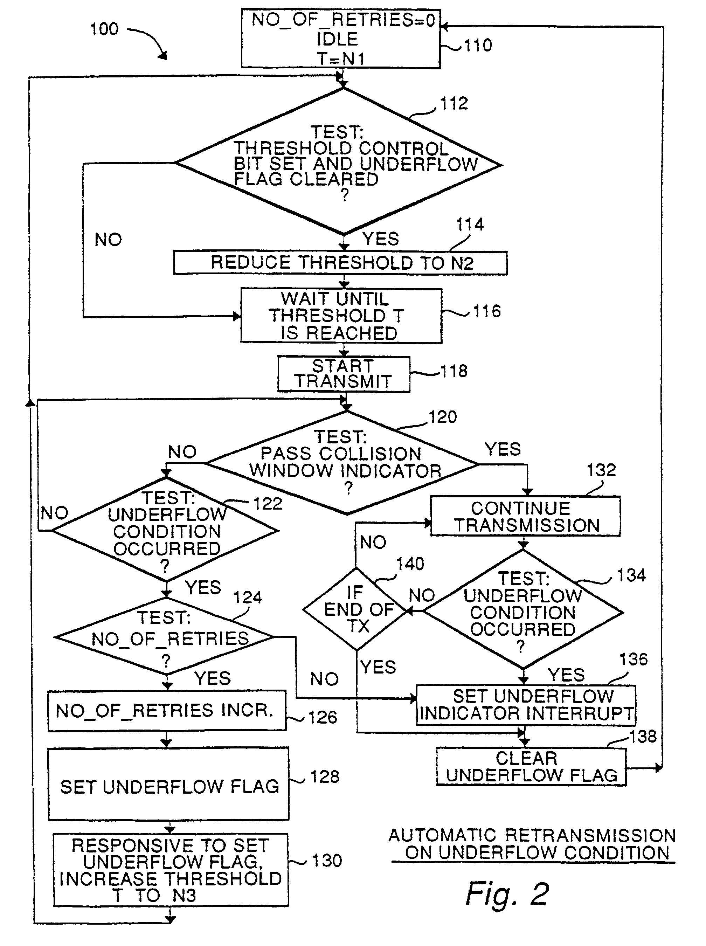

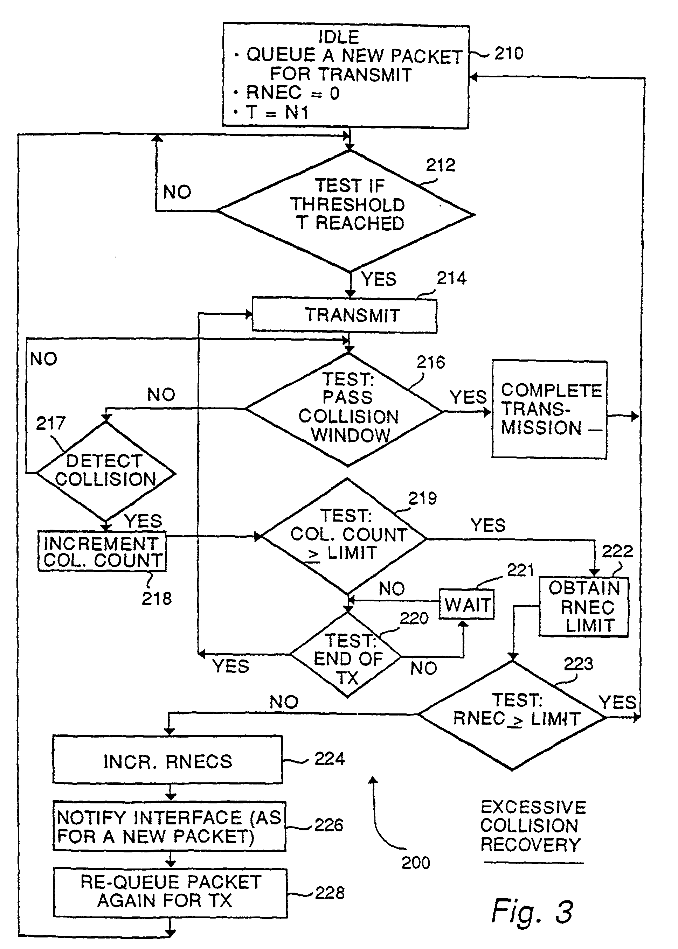

The foregoing and other objects, advantages and features of the invention will be more readily understood with reference to the following-detailed description of the invention in conjunction with the accompanying drawings, in which:
◆ Fig. 1 is a representation in block diagram form of a node connected to a network system in accordance with an embodiment of the invention;
◆ Fig. 2 is a representation, in flow chart form, of an algorithm for automatic retransmission following an underflow condition that can be implemented by the adapter of Fig. 1 in accordance with an embodiment of the invention; and
◆ Fig. 3 is a representation in flow chart form of an algorithm for excessive collisions recovery that can be implemented by the adapter of Fig. 1 in accordance with an embodiment of the invention.

### DESCRIPTION OF A PREFERRED EMBODIMENT

Fig. 1 illustrates a node 10, e.g., a computer system, connected to a network system 12, such as a LAN or disk storage facility. The node 10 includes an network adapter 14, a main memory 16, a CPU 18, and other peripheral units 20, such as terminals, all of which are interconnected by a system bus 22, e.g., a PCI bus. The adapter 14 connects to the system bus 22 through a preferably bi-directional path 24, and connects to the network system 12 through a preferably bi-directional path 26. The network system 12 embodies preferably a bus topology to accommodate, e.g., high-bandwidth, half-duplex data communication among the adapter 14 of node 10 and adapters (not shown) of other nodes 27, e.g., of similar construction, connected thereto. Alternatively, the adapter 14 may be configured instead to provide full-duplex communication between the nodes 10, 27 coupled to the network system 12.

During a receive operation, data is transferred from the network 12 into the adapter 14 and is eventually transferred to the main memory 16 to await processing. Data transfer between the adapter 14 and the main memory 16 is performed in accordance with a direct memory access (DMA) transfer on the system bus 22. A DMA transfer involves a request for access to the system bus followed by a grant of access and a "burst" of data of a predetermined size. During a transmit operation, data retrieved from the main memory 16 is transferred from the adapter 14 to the network system 12. Transfers of data between the network system 12 and the adapter 14 are, e.g., at a fixed rate on an individual packet basis.

The system bus 22 is not always immediately available for access by the adapter 14 to perform read and write transfers to the main memory 16. The bus 22 may be busy performing other operations involving other units connected to it, or another component, e.g., units 20, may be performing a read or write memory transfer. Consequently, the system bus 22 is considered a shared resource (as is the main memory 16), and the time between issuance of a request to access the system bus 22 and grant of access to the bus constitutes "latency" of the system bus 22.

To accommodate bus latency, the adapter 14 includes a buffer memory, preferably comprising a FIFO ("first-in-first-out") transmit buffer 30 and a FIFO receive buffer 32. Data entering the adapter 14 over line 26 from the network system 12 passes through a network interface 34 under the control of a receive state machine 36, into the receive buffer 32. The receive buffer 32 provides temporary storage of the data until the adapter 14 gains access to the system bus 22, at which time a receive DMA (direct memory access) module 37 "reads" the data in the receive FIFO buffer 32 and performs a write transfer to the main memory 16. Thereafter, the data passes through a system bus interface 38 and onto the system bus 22, and is written to main memory 16.

Data to be transmitted to the network system 12 is read from the main memory 16 by a transmit DMA module 39 upon the system bus interface 38 accessing the system bus 22, and the data is placed in the transmit buffer 30. When the adapter 14 gains access to the network system 12, the data is provided to the network interface 34 under control of a transmit state machine 40, and then onto the network system 12. The components of the adapter 14 are interconnected by an internal bus 35.

The network interface 34 contains conventional data path logic and physical connections needed to ensure that the adapter 14 meets the timing and electrical characteristics required to communicate with the network system 12. For example, the network interface 34 can include a media access control ("MAC") for implementing the applicable network protocol, e.g., Ethernet, of the network 12.

The system bus interface 38 contains the conventional data path logic and physical connections needed to ensure that the adapter 14 meets the timing and electrical characteristics required to communicate on the system bus 22. For example, the system bus 22 can be, for example, a PCI bus, and the interface 38 can be, for example, a PCI bus interface.

Bi-directional data flow through the adapter 14 is controlled by an arbiter function of the interface 38. The arbiter function arbitrates for control of the system bus 22 on behalf of the DMA machines 37, 39 in accordance with conventional arbitration processes. As with the receive and transmit state machines 36, 40, the arbiter module 38 preferably includes registers and combinational logic (not shown) configured as sequential logic circuits.

The DMA machines 37 and 39 direct the bi-directional flow of data between the network and the system bus 22 through the transmit and receive buffers 30, 32. Specifically, the transmit DMA machine 39 initiates transfer of outbound data bursts from the main memory 16 with a read transfer on the system bus. These outbound data bursts are temporarily stored in the transmit buffer 30 and subsequently transmitted, by the transmit state machine 40, onto the network system 12. The receive state machine 36 manages inbound data bursts from the network system 12 and temporarily stores the data in the receive buffer 32 and the receive DMA state machine 37, moves the data to the memory 16 via the bus interface 38 and system bus 22. An example of a function performed by the state machines 36, 40 is the conversion of a serial bit stream of data to/from the network system 12 into byte-wide words after/prior to storing the data in the buffers.

Upon a predetermined threshold level of data having been received in the receive buffer 32 and upon gaining access to the system bus 22, the receive state machine 36 initiates transfer of a burst of inbound data of a predetermined size to the main memory 16 as a write transfer on the system bus 15. The size of a burst of data may vary depending on system bus characteristics. The amount of data transferred during a burst on the system bus 22 is typically much less than the block of data transferred, e.g., in a packet, on the network system 12. The receive DMA machine 37 and transmit DMA machine 39 must arbitrate for access to the system bus 22 for each transfer of a single burst of data on the bus 22.

To the extent not described herein, the construction and operation of the state machines 36, 40, the DMA machines 37, 39, and the interface module 38 will be apparent to those skilled in the art, and are conventional except as indicated herein.

Fig. 2 illustrates an algorithm 100 for automatic retransmission following transmit buffer underflow condition, which can be implemented by the transmit state machine 40.

At block 110, the transmit state machine 40 is inactive, that is in an idle mode. Block 110 fetches a new packet for transmission. Block 110 also initializes variables, including a variable called "NO_OF_RETRIES", and a variable representing a threshold "T". NO_OF_RETRIES indicates a number of sets of retries that the transmit state machine 40 has attempted. The threshold "T" indicates a number of bytes required to be available in the transmit buffer 30 before transmission will be permitted to begin.

Both of these variables NO_OF_RETRIES and T have values that are preferably programmable to account for individual needs of the particular adapter in which the algorithm 100 is implemented. The invention can place a limit, for example, on the value of NO_OF_RETRIES, a value of one (1), which will cause the transmit state machine to attempt a single additional set of retransmissions whenever an underflow condition occurs.

Variable T can be set initially to a value of N1, though it can assume, for example, any of three values N1, N2, or N3 during operation of the adapter 14, where N1 is an intermediate value, N2 is less than or equal to N1, and N3 is greater than or equal to N1 (N2 ≤ N1 ≤ N3). N1 is equal to, e.g., 72 bytes. N2 is equal to, e.g., the number of bytes contained in the minimal addressable block data (i.e., a single longword) in the transmit buffer 30 and thus the minimal number of bytes that the transmit state machine 40 can fetch therefrom. Accordingly, N2 can be as few as 4 bytes of data. N3 is equal to a substantial portion of the packet, e.g., 128 bytes.

Block 112 tests whether both a threshold control bit is set, e.g., to a logic HIGH, and an underflow flag cleared, e.g., to logic LOW. Responsive to the threshold control bit being set and the underflow flag cleared, block 114 reduces the threshold T from its initial value of N1 to its value N2, thus reducing the number of bytes required in the transmit buffer 30 for commencing transmission. The underflow flag indicates whether an underflow has occurred, and, if set, as described below, will cause the algorithm 100 to change the value of T to the largest of its possible values, i.e., N3.

After block 114, or if the test of block 112 produces a negative result (i.e., the threshold control bit is cleared or the underflow flag is set), block 116 causes the transmit state machine to wait until the threshold T is reached, i.e., until the transmit buffer 30 has the number of bytes available for transmission determined by the applicable value of T. Then, block 118 causes transmission to begin.

Block 120 tests whether a collision window has expired. The collision window is the time during which the adapter listens for collisions on the network 12, and is sometimes referred to as the network acquisition time. The collision window is specified by another variable referred to as the collision window indicator, and represents a system parameter determined typically by the specifications of the network. In 10-Mbps Ethernet networks, the collision window indicator will specify a network acquisition time of 51.2 microseconds.

If the collision window specified by the collision window indicator has not expired, block 122 tests whether the underflow flag is set so as to indicate that an underflow condition has occurred. As described above, an underflow condition occurs when the transmit buffer 30 lacks packet data sufficient to meet the required transmission rate for the network. If the underflow flag is not set, the algorithm 100 returns to block 120 to examine whether the collision window has expired.

On the other hand, if the test of block 122 indicates that the underflow flag condition occurs, block 124 tests whether the NO_OF_RETRIES is less than a limit of R, e.g., one. In other words, if an underflow condition occurs during the collision window and the number of retries is less than R, the test of block 124 will yield a "YES"; otherwise, the test of block 124 will yield a "NO".

With an affirmative result to the test of block 124, the algorithm 100 proceeds to block 126 which increments the NO_OF_RETRIES, e.g., by one.

Block 128 causes the underflow flag to be set and schedules the underflowed packet for retransmission. Block 130 responds to the set underflow flag by increasing the threshold to the value N3. Subsequently, the algorithm 100 returns to block 112.

If the test of 120 indicates that the collision window has expired, block 132 causes the transmit state machine to continue transmission of the packet.

After a preselected period of time, called the testing interval, block 134 tests the underflow condition to determine whether an underflow has occurred at a time after the collision window has expired. If such an underflow has occurred, block 136 asserts an underflow interrupt and block 138 then clears the underflow flag. Following block 138, the algorithm 100 returns to block 110, where the transmit state machine 40 resumes its idle mode and the variables are reset as described above in conjunction with that block.

If the test of block 134 indicates that an underflow has not occurred, block 140 then tests whether the packet transmission has been completed by determining whether an end transmit packet has been sent. If transmission has not been completed, the algorithm 100 returns to block 132 where transmission is continued. On the other hand, if the transmission has been completed, the algorithm 100 proceeds to block 138 where the underflow flag is cleared, and then proceeds to block 110, as described above.

Accordingly, algorithm 100 provides an efficient technique for automatic retransmission in the event of an underflow of data to the transmit buffer 30, which can improve system performance and reduce data latency.

It should be evident that algorithm 100 implements "automatic retry" only if the underflow occurred during transmission in the collision window interval. The invention can be implemented more generally for implementing "automatic retry" at any time during the transmission period, including both during and after the collision window interval.

Fig. 3 illustrates an algorithm 200 for excessive collision recovery. Algorithm 200 can be implemented by the transmit state machine 40, separate from the algorithm 100 with respect to automatic transmission resulting from buffer underflow, or the two algorithms 100, 200 can be integrated together, as will be apparent to those skilled in the art. Algorithm 200 starts in block 210, which queues a new packet for transmission and initializes the special variables "RNEC" and "T" used in algorithm 200, as described below.

Block 212 tests whether the threshold T has been reached, preferably in the same manner as described above with respect to block 116. In this case, the threshold T can equal N1 or can be set a different value. If the threshold T has not been reached, algorithm 200 simply repeats the test of block 212 until that threshold has been reached. Block 212 also initializes a variable COLLISION_COUNT to zero.

On the other hand, if the threshold T has been reached, block 214 causes the transmit state machine 40 to commence transmitting data. Block 215 tests whether the collision window has expired by examining the collision window indicator, preferably as described above with respect to block 120. If the collision window has expired, algorithm 200 returns to block 210 after completing transmission in block 216, and the foregoing steps are repeated for a new packet. If the collision window has not expired, block 217 detects whether or not a collision has occurred with respect to the packet involved in the transmission. If block 217 does not detect a collision, the algorithm 200 returns to block 215.

Each time a collision is detected with respect to the involved packet, block 218 increments the variable called COLLISION_COUNT, and block 219 tests the value of COLLISION_COUNT. When the value of COLLISION_COUNT reaches a preselected limit, which is set, for example, at sixteen by applicable standards, block 219 indicates that an excessive number of collisions has occurred. On the other hand, as long as COLLISION_COUNT is below sixteen, the test of block 219 will indicate that an excessive number of collisions has not occurred.

Following a negative result from block 219 indicating that an excessive collision condition has not occurred, block 220 tests whether the end of transmission has occurred, preferably in the same manner as block 140 of algorithm 100. If the end of transmission has occurred, algorithm 200 returns to block 214 and transmission of the same packet restarts. In other words, the algorithm 200 causes, e.g., a CSMA/CD regular transmission retry (up to 16 attempts). If block 220 indicates that the end of transmission has not occurred, block 221 causes the algorithm 200 to wait on the order of a bit time before the test of block 220 is repeated. The "bit time" is the time required to transmit a single bit over the channel, e.g., 10 nanoseconds for channels operating at 100 Mbps (or 100 nanoseconds for 10 Mbps channels). During the "wait" periods of block 221, the node transmits JAM, as described in the "Background of the Invention" section above.

According to the invention, if block 219 indicates that an excessive collision condition has occurred, blocks 222-228 will cause the steps of blocks 212-220 to be repeated in an iterative fashion for a number of times, called the "Retry Number on Excessive Collision" (RNEC) until no collision is detected and transmission is successful, or until a preselected RNEC limit is reached. For example, if the COLLISION_COUNT limit is sixteen, and the RNEC limit is two, the algorithm 200 will repeat blocks 212-220 for up to thirty-two times (i.e., twice repeating sixteen repetitions). If the RNEC limit is reached without successful transmission of the packet involved in the repeated collisions, the algorithm discards the packet as in the prior art described above, and returns to block 210 where a new packet is queued.

More specifically, if the test of block 218 indicates that an excessive number of collisions has occurred, block 222 obtains an RNEC limit and block 223 tests whether RNEC is less than the preset limit. If the test of block 223 indicates that the RNEC limit has been reached, algorithm 200 returns to block 210 after end of transmission, as described above. If the test of block 223 indicates that the RNEC limit has not been reached, block 224 increments the RNEC count, e.g., by one. Then block 226 causes the network interface 34 to treat that packet as if it were a new packet to be transmitted for the first time. Block 228 re-queues the packet involved in the excessive collisions for retransmission. Subsequently, the algorithm 200 returns to block 212.

Accordingly, algorithm 200 provides an efficient technique for excessive collision recovery, which can improve system performance and reduce data latency. The RNEC limit can be pre-programmed or can be dynamically determined in response to traffic conditions. In other words, when the network experiences periods of peak congestion, the adapter 14 can reduce the RNEC limit, e.g., so as to not aggravate the heightened collision condition that would exist. On the other hand, at other times, the RNEC limit can be increased so as to increase the possibility of successfully transmitting the next packet and to reduce packet latency by avoiding the need to let an upper layer protocol reschedule this packet for transmission until a successful transmission occurs. Block 222 is responsible for either obtaining the pre-set RNEC limit or calculating it based on network condition information obtained, e.g., from network status packets.

### Other Features and Embodiments

An illustrative implementation of the invention was described above. Various other features and embodiments will be apparent to those skilled in the art from the disclosure set forth herein. For example, while retry for underflow or excessive collision may occur in the described embodiment at any time as long as the packet data is not overwritten in the transmit buffer, the invention can also be implemented so that the retry only occurs if the underflow happens during the transmission collision window.

It is also possible to implement the invention with an algorithm for computing a maximum number of retries based on underflow or collision history information, network traffic conditions, and/or bus load conditions, so as to optimize the likelihood of successful transmission.

Consider, specifically, transmit buffer underflow conditions in this regard. Underflow occurs when the host system bus peak latencies are high and/or the system bus throughput is small. Consequently, underflow is mainly a function of the host CPU system bus. On the other hand, if the network is congested and R is set to a high value, unnecessary interference to the network is being introduced. Accordingly, in some applications, it makes sense to use a dynamically computed value (rather than a preset, constant value) for R so as to reduce its value during periods of high network congestion and/or high host CPU bus load. Consequently, block 124 may compute R based on the above-mentioned history information prior to using that value in testing NO_OF_RETRIES, instead of using a fixed value for limit R.

It is also possible to use an algorithm to compute a backoff schedule, in which, after a predetermined number of unsuccessful retries, a delay of computed duration is inserted before subsequent retries in order to avoid the condition that caused the retries to be unsuccessful.

For underflow or excessive collisions, the starting time of the retry may also be a function of the number of bytes of the involved packet that have been DMA'ed into the transmit buffer. The function can be a programmed value (e.g., for underflow, to wait until at least 160 bytes of the packet are contained in the buffer) or adaptive in that it may learn from history or be a function of the number of retries.

Accordingly, the invention can minimize packet loss and enable underflow or excessive collision recovery without upper network layer involvement. Consequently, the invention provides a fast and simple way to deliver packets, even when an underflow or excessive collisions occur under transients of large system bus latencies. The invention can also decrease average packet delay by avoiding upper network layer involvement. Moreover, the invention allows a shorter delay time form start of packet transfer into the transmit buffer until start of transmission because there is no need to await receipt of the typically larger amount of the packet that the prior art requires in order to avoid underflow.

While this invention has been described with reference to specific embodiments, this description is not meant to be construed in a limiting sense. Various modifications of the disclosed embodiments, as well as other embodiments of the invention, will be apparent to persons skilled in the art upon reference to this description. It is therefore contemplated that the appended claims will cover any such modifications or embodiments as fall within the true scope of the invention.

## Claims

1. A method of operating an adapter (14) connected to a network by a shared resource (12) for transmitting data thereto, said adapter having a transmit buffer (30), said method comprising the steps of:
a) commencing transmission (118) after a pre-determined first amount of data is stored (116) in the transmit buffer;
b) after the transmission commencing step and if a buffer underflow condition occurs (122), said adapter, without issuing an interrupt signal indicative of said underflow condition, performing the steps comprising stopping transmission and then recommencing transmission (118) only after a predetermined increased amount of data, including the first amount of data, has been stored (116) in said transmit buffer; and
c) promptly after step (b), retrying transmission (118) and repeating step (b) and this step (c) for a number of times until one of a first condition and a second condition occurs, said first condition comprising completion of transmission and said second condition comprising reaching (124) a retry limit for the number of times said step (b) is repeated.

2. The method of claim 1 wherein said retry limit comprises a predetermined fixed value.

3. The method of claim 1 further comprising computing said retry limit based on prior underflow conditions experienced by said adapter (14).

4. The method of claim 1 wherein said retry limit is dynamically computed based on loading of said shared resource.

5. The method of claim 1 wherein said adapter (14) issues (136) an interrupt signal indicative of a buffer underflow condition on reaching said retry limit.

6. The method of claim 1 further comprising repeating steps a) through c) if the buffer underflow condition occurs during said step c).

7. The method of claim 1 wherein said amounts of data corresponding to transmit thresholds comprise programmable values.

8. The method of claim 1 further including the steps of, if a buffer underflow condition occurs (122) for each and every transmission attempt up to said retry limit, discarding said data stored in said transmit buffer (30) and generating (136) an interrupt signal indicative of an underflow condition.

9. The method of claim 1 wherein recovery from a transmit buffer underflow condition is effected without upper network layer involvement.

10. The method of claim 1 wherein said transmit buffer underflow condition occurs (122) when, during transmission, data stored in said transmit buffer (30) is insufficient to meet a required transmission rate.

11. The method of claim 1 wherein steps a) through c) are performed if said buffer underflow condition occurs (122) in said initial transmission attempt during a collision window interval.

12. The method of claim 1 further comprising:
A. implementing said step a) by:
(i) setting a threshold variable T to a first value of N2 bytes representing said first amount of data to be stored in said transmit buffer (30) prior to commencing transmission (118);
(ii) causing said adapter (14) to obtain data to be transmitted to the shared resource and storing said data in said transmit buffer;
(iii) commencing transmission of said data to said shared resource (12) only after T bytes of data are stored in said transmit buffer; then
B. testing (120) whether a pre-determined period of time has expired since commencing transmission of said data, said period of time comprising a collision window and:
(i) if said collision window has expired, continuing transmission (132) until one of a first and second condition occurs, said first condition comprising a buffer underflow condition (134) and said second condition comprising completion of transmission (140),
(ii) if said collision window has not expired and an underflow condition has not occurred, repeating step B,
(iii) if a buffer underflow condition occurs in step B(ii) and if a retry count has reached the retry limit, stopping transmission and generating (136) a message signal indicative of said underflow condition; and
(iv) if a buffer underflow condition occurs in step B(ii) and if the retry limit is below said pre-determined limit, implementing steps b) and c) by changing said retry count to reflect said transmission of step B and setting the threshold variable to a second value N3 that is greater than said first value N2, and repeating steps A(ii), A(iii) and B.

## Patentansprüche

1. Verfahren zum Betreiben eines Adapters (14), welcher durch ein gemeinsam genutztes Betriebsmittel (12) zum Senden von Daten darin an ein Netzwerk angeschlossen ist, wobei der Adapter einen Sendepuffer (30) aufweist, wobei das Verfahren die folgenden Schritte umfasst:
a) Beginnen einer Übertragung (118), nachdem eine vorbestimmte erste Datenmenge im Sendepuffer gespeichert wurde (116);
b) nach dem Schritt des Beginnens der Übertragung und falls ein Pufferunterlaufszustand auftritt (122), Durchführen der Schritte, welche ein Anhalten der Übertragung und dann ein Wiederbeginnen der Übertragung (118), nur nachdem eine vorbestimmte erhöhte Datenmenge einschließlich der ersten Datenmenge im Sendepuffer gespeichert wurde (116), umfassen, durch den Adapter ohne ein Ausgeben eines Unterbrechungssignals, welches den Unterlaufszustand bezeichnet; und
c) sofort nach Schritt (b) Wiederversuchen einer Übertragung (118) und Wiederholen von Schritt (b) und von diesem Schritt (c) für eine Häufigkeit, bis ein erster oder ein zweiter Zustand auftritt, wobei der erste Zustand ein Beenden einer Übertragung umfasst und der zweite Zustand ein Erreichen (124) einer Wiederversuchsgrenze für die Häufigkeit umfasst, welche der Schritt (b) wiederholt wird.

2. Verfahren nach Anspruch 1, wobei die Wiederversuchsgrenze einen vorbestimmten Festwert umfasst.

3. Verfahren nach Anspruch 1, weiterhin umfassend ein Berechnen der Grenze auf der Grundlage vorhergehender Unterlaufszustände, welche durch den Adapter (14) erfahren wurden.

4. Verfahren nach Anspruch 1, wobei die Wiederversuchsgrenze dynamisch auf der Grundlage der Last des gemeinsam genutzten Betriebsmittels berechnet wird.

5. Verfahren nach Anspruch 1, wobei der Adapter (14) ein Unterbrechungssignal ausgibt (136), welches einen Pufferunterlaufszustand beim Erreichen der Wiederversuchsgrenze bezeichnet.

6. Verfahren nach Anspruch 1, weiterhin umfassend ein Wiederholen der Schritte a) bis c), falls der Pufferunterlaufszustand während des Schritts c) auftritt.

7. Verfahren nach Anspruch 1, wobei die Datenmengen entsprechend Sendeschwellen programmierbare Werte umfassen.

8. Verfahren nach Anspruch 1, weiterhin umfassend die Schritte des Verwerfens der Daten, welche im Sendepuffer (30) gespeichert sind, und des Erzeugens (136) eines Unterbrechungssignals, welches einen Unterlaufszustand bezeichnet, falls ein Pufferunterlaufszustand für jeden und alle Übertragungsversuche bis zu der Wiederversuchsgrenze auftritt (122).

9. Verfahren nach Anspruch 1, wobei ein Wiederherstellen nach einem Sendepufferunterlaufszustand ohne eine Beteiligung der oberen Netzwerkschicht bewirkt wird.

10. Verfahren nach Anspruch 1, wobei der Sendepufferunterlaufszustand auftritt (122), wenn während einer Übertragung Daten, welche im Sendepuffer (30) gespeichert sind, unzureichend sind, um eine benötigte Übertragungsgeschwindigkeit zu erfüllen.

11. Verfahren nach Anspruch 1, wobei Schritte a) bis c) durchgeführt werden, falls der Pufferunterlaufszustand beim anfänglichen Übertragungsversuch während eines Kollisionsfensterintervalls auftritt (122).

12. Verfahren nach Anspruch 1, weiterhin umfassend:
A. Implementieren des Schritts a) durch:
(i) Setzen einer Schwellenvariablen T auf einen ersten Wert von N2 Bytes, welche die erste Datenmenge darstellen, welche im Sendepuffer (30) vor einem Beginnen einer Übertragung (118) gespeichert werden müssen;
(ii) Verursachen, dass der Adapter (14) Daten erhält, welche an das gemeinsam genutzte Betriebsmittel gesendet werden müssen, und Speichern der Daten im Sendepuffer;
(iii) Beginnen einer Übertragung der Daten an das gemeinsam genutzte Betriebsmittel (12) nur nachdem T Daten-Bytes im Sendepuffer gespeichert sind; dann
B. Überprüfen (120), ob eine vorbestimmte Zeitdauer seit einem Beginn einer Übertragung der Daten verstrichen ist, die Zeitdauer umfassend ein Kollisionsfenster und:
(i) falls das Kollisionsfenster verstrichen ist, ein Fortsetzen einer Übertragung (132) bis ein erster oder ein zweiter Zustand auftritt, wobei der erste Zustand einen Pufferunterlaufszustand (134) umfasst und der zweite Zustand ein Beenden einer Übertragung (140) umfasst,
(ii) falls das Kollisionsfenster nicht verstrichen ist und kein Pufferunterlaufszustand aufgetreten ist, Wiederholen von Schritt B,
(iii) falls ein Pufferunterlaufszustand in Schritt B(ii) auftritt und falls ein Wiederversuchszähler die Wiederversuchsgrenze erreicht hat, Anhalten einer Übertragung und Erzeugen (136) eines Nachrichtensignals, welches den Unterlaufszustand bezeichnet; und
(iv) falls ein Pufferunterlaufszustand in Schritt B(ii) auftritt und falls die Wiederversuchsgrenze unterhalb der vorbestimmten Grenze liegt, Implementieren der Schritte b) und c) durch Verändern des Wiederversuchszählers, um die Übertragung des Schritts B wiederzugeben, und Setzen der Schwellenvariablen auf einen zweiten Wert N3, welcher größer als der erste Wert N2 ist, und Wiederholen der Schritte A(ii), A(iii) und B.

## Revendications

1. Procédé pour faire fonctionner un adaptateur (14) connecté à un réseau par une ressource partagée (12) pour y transmettre des données, ledit adaptateur possédant une mémoire tampon de transmission (30), ledit procédé comprenant les étapes consistant à :
a) commencer la transmission (118) après qu'une première quantité de données prédéterminée est stockée (116) dans la mémoire tampon de transmission ;
b) après l'étape consistant à commencer la transmission et si une condition de dépassement de capacité négatif de la mémoire tampon se produit (122), ledit adaptateur, sans émettre un signal d'interruption indicatif de ladite condition de dépassement de capacité négatif, exécuter les étapes comprenant le fait d'arrêter la transmission puis de recommencer la transmission (118) seulement après qu'une quantité accrue de données prédéterminée, comprenant la première quantité de données, a été stockée (116) dans ladite mémoire tampon de transmission ; et
c) aussitôt après l'étape (b), essayer de relancer la transmission (118) et répéter l'étape (b) et cette étape (c) un certain nombre de fois jusqu'à ce qu'une d'une première condition et d'une seconde condition se produise, ladite première condition comprenant l'établissement de la transmission et ladite seconde condition comprenant le fait d'atteindre (124) une limite de tentatives de relance le nombre de fois que ladite étape (b) est répétée.

2. Procédé selon la revendication 1, dans lequel ladite limite de tentatives de relance comprend une valeur fixe prédéterminée.

3. Procédé selon la revendication 1 comprenant en outre le calcul de ladite limite de tentatives de relance sur la base des conditions de dépassement de capacité négatif antérieures auxquelles est confronté ledit adaptateur (14).

4. Procédé selon la revendication 1, dans lequel ladite limite de tentatives de relance est calculée dynamiquement sur la base du chargement de ladite ressource partagée.

5. Procédé selon la revendication 1, dans lequel ledit adaptateur (14) émet (136) un signal d'interruption indicatif d'une condition de dépassement de capacité négatif de la mémoire tampon lorsque ladite limite de tentatives de relance est atteinte.

6. Procédé selon la revendication 1 comprenant en outre la répétition des étapes a) à c) si la condition de dépassement de capacité négatif de la mémoire tampon se produit pendant ladite étape c).

7. Procédé selon la revendication 1, dans lequel lesdites quantités de données correspondant aux seuils de transmission comprennent des valeurs programmables.

8. Procédé selon la revendication 1 comprenant en outre les étapes consistant à, si une condition de dépassement de capacité négatif de la mémoire tampon se produit (122) pour chacune et toute tentative de transmission jusqu'à ladite limite de tentatives de relance, supprimer lesdites données stockées dans ladite mémoire tampon de transmission (30) et générer (136) un signal d'interruption indicatif d'une condition de dépassement de capacité négatif.

9. Procédé selon la revendication 1, dans lequel la récupération à partir d'une condition de dépassement de capacité négatif de la mémoire tampon de transmission est effectuée sans implication de la couche réseau supérieure.

10. Procédé selon la revendication 1, dans lequel ladite condition de dépassement de capacité négatif de la mémoire tampon de transmission se produit (122) lorsque, pendant la transmission, les données stockées dans ladite mémoire tampon de transmission (30) sont insuffisantes pour atteindre un débit de transmission requis.

11. Procédé selon la revendication 1, dans lequel les étapes a) à c) sont exécutées si ladite condition de dépassement de capacité négatif de la mémoire tampon se produit (122) dans ladite tentative de transmission initiale pendant un intervalle de fenêtre de collision.

12. Procédé selon la revendication 1 comprenant en outre les étapes consistant à :
A. mettre en oeuvre ladite étape a) en :
(i) établissant une variable de seuil T à une première valeur de N2 octets représentant ladite première quantité de données devant être stockées dans ladite mémoire tampon de transmission (30) avant de commencer la transmission (118) ;
(ii) faisant que ledit adaptateur (14) obtienne les données devant être transmises à la ressource partagée et en stockant lesdites données dans ladite mémoire tampon de transmission ;
(iii) commençant la transmission desdites données à ladite ressource partagée (12) seulement après que T octets de données ont été stockés dans ladite mémoire tampon de transmission, ensuite
B. tester (120) si une période de temps prédéterminée a expiré depuis le commencement de la transmission desdites données, ladite période de temps comprenant une fenêtre de collision et :
(i) si ladite fenêtre de collision a expiré, continuer la transmission (132) jusqu'à ce qu'une d'une première et d'une seconde condition se produise, ladite première condition comprenant une condition de dépassement de capacité négatif de la mémoire tampon (134) et ladite seconde condition comprenant l'établissement de la transmission (140),
(ii) si ladite fenêtre de collision n'a pas expiré et qu'une condition de dépassement de capacité négatif ne s'est pas produite, répéter l'étape B,
(iii) si une condition de dépassement de capacité négatif de la mémoire tampon se produit à l'étape B(ii) et si un nombre de relances a atteint la limite de tentatives de relance, arrêter la transmission et générer (136) un signal de message indicatif de ladite condition de dépassement de capacité négatif ; et
(iv) si une condition de dépassement de capacité négatif de la mémoire tampon se produit à l'étape B (ii) et si la limite de tentatives de relance est en dessous de ladite limite prédéterminée, mettre en oeuvre les étapes b) et c) en changeant ledit nombre de relances pour refléter ladite transmission de l'étape B et établir la variable de seuil à une seconde valeur N3 qui est supérieure à ladite première valeur N2, et répéter les étapes A(ii), A(iii) et B.
